# FASCICULE DE BREVET EUROPEEN

(11) **EP 4 658 133 B1**
(45) Date de publication et mention de la délivrance du brevet: **21.10.2026**
(21) Numéro de dépôt: 24701219.8
(22) Date de dépôt: 22.01.2024
(51) Int. Cl.: A47C 1/03, B60N 2/75

(54) **ACCOUDOIR MUNI D'UN SYSTÈME DE RÉGLAGE EN ROTATION**
ARMLEHNE MIT EINEM DREHEINSTELLUNGSSYSTEM
ARMREST PROVIDED WITH A ROTATIONAL ADJUSTMENT SYSTEM

(30) Priorité: 30.01.2023 FR 2300823
(43) Date de publication de la demande: 10.12.2025
(73) Titulaire: Safran Seats, 78370 Plaisir (FR)
(72) Inventeur: LEVEQUE, Michaël, 77550 Moissy-Cramayel (FR)
(74) Mandataire: Marconnet, Sébastien
(86) Numéro de dépôt international: PCT/EP2024/051369
(87) Numéro de publication internationale: WO 2024/160566

(56) Documents cités:
- US-A- 5 597 209
- US-A1- 2007 241 603
- US-A1- 2016 347 215
- US-B2- 6 467 847

## Description

La présente invention porte sur un accoudoir muni d'un système de réglage en rotation. L'invention trouve une application particulièrement avantageuse, mais non exclusive, avec les sièges d'avion, en particulier les sièges d'avion de type « première classe » ou « classe affaires ».

De façon connue en soi, un siège de type classe affaires comporte une assise et un dossier articulé par rapport à l'assise par l'intermédiaire d'une liaison pivot. Le siège peut également comporter un repose-jambes articulé par rapport à l'assise par l'intermédiaire d'une liaison pivot. L'assise et le dossier sont montés sur une structure de siège destinée à être fixée sur le plancher d'un avion au moyen de rails de fixation.

Le siège est avantageusement pourvu d'une cinématique lui permettant d'être mobile entre une position relevée et une position lit. Dans la position relevée, le dossier forme un angle non nul par rapport à l'assise. La position relevée est une position adaptée à une phase de décollage, d'atterrissage, ou de stationnement de l'avion. Dans la position lit, le dossier et l'assise et le cas échéant un repose pieds se situent dans un prolongement de l'assise de façon à former une surface de couchage sensiblement horizontale pour le passager. Des positions intermédiaires de confort sont aussi proposées, telles que la position "relax" dans laquelle le dossier du siège est fortement incliné vers l'arrière. Généralement, ces positions intermédiaires sont obtenues par l'inclinaison du dossier pivotant autour d'un axe horizontal et perpendiculaire à un axe d'extension du siège.

Le siège peut être pourvu d'un accoudoir mobile apte à prendre plusieurs positions en fonction de l'orientation du siège. Il est souhaitable de maintenir l'accoudoir dans une position horizontale lorsque le dossier se déplace vers l'arrière en direction d'une position de confort du siège.

Le document US6467847 décrit un accoudoir comportant un arbre de montage et un mécanisme de réglage situé entre les deux extrémités de l'accoudoir. L'arbre de montage contient deux fentes d'extrémité. Le mécanisme de réglage est apte à mémoriser une position angulaire de l'accoudoir de façon à ramener l'accoudoir à la position mémorisée.

Le document EP0655365 décrit un mécanisme de rabattement d'un accoudoir applicable aux accoudoirs de siège de véhicule. Ce mécanisme est conçu pour permettre de prendre une première position horizontale et une deuxième position entièrement repliée. Le passage d'une position à l'autre est effectué par l'actionnement d'un bouton.

Le document US5597209 décrit un mécanisme à cliquet permettant de régler l'inclinaison d'un accoudoir d'un siège de véhicule. La manipulation de ce mécanisme pour passer d'une position haute à une position basse de l'accoudoir ne nécessite aucun appui sur un bouton.

Ces dispositifs de l'état de la technique ne permettent toutefois pas de réaliser une incrémentation angulaire fine de l'accoudoir.

L'invention vise notamment à remédier efficacement à cet inconvénient en proposant un accoudoir pour un siège comportant :
- un bras d'accoudoir,
- un corps d'accoudoir apte à supporter une partie du corps d'un passager,
- un axe porté par le bras d'accoudoir définissant un axe de rotation du corps d'accoudoir par rapport au bras d'accoudoir,
- un dispositif de réglage en rotation du corps d'accoudoir comportant :
   - un élément fixe fixé sur le bras d'accoudoir, ledit élément fixe comportant une portion crantée,
   - un élément mobile lié en rotation avec le corps d'accoudoir tout en étant mobile en translation par rapport au corps d'accoudoir suivant l'axe de rotation de l'accoudoir, ledit élément mobile comportant une portion crantée de forme complémentaire de la portion crantée de l'élément fixe, et
   - un dispositif de débrayage actionnable par un moyen d'actionnement, ledit dispositif de débrayage étant apte à prendre :
      - un état verrouillé dans lequel la portion crantée de l'élément mobile vient en appui contre la portion crantée de l'élément fixe dans une position angulaire de butée de façon à bloquer une rotation du corps d'accoudoir dans un premier sens de rotation tout en autorisant une rotation du corps d'accoudoir dans un deuxième sens de rotation opposé au premier sens de rotation, et
      - un état déverrouillé dans lequel la portion crantée de l'élément mobile est éloignée axialement de la portion crantée de l'élément fixe de façon à autoriser une rotation du corps d'accoudoir dans le premier sens de rotation pour permettre une modification de la position angulaire de butée,
      - un passage de l'état verrouillé à l'état déverrouillé étant apte à être obtenu par un déplacement en translation de l'élément mobile suivant l'axe de rotation du corps d'accoudoir.

L'invention permet ainsi, grâce aux portions crantées de l'élément fixe et de l'élément mobile, d'effectuer un réglage angulaire précis de l'accoudoir de façon à s'assurer que l'accoudoir puisse s'étendre dans un plan horizontal quelle que soit la position du siège et l'inclinaison du dossier correspondante.

Selon une réalisation de l'invention, le dispositif de débrayage comporte une tige de débrayage mobile en translation par rapport au corps d'accoudoir et une bielle ayant une première extrémité mobile en rotation par rapport à la tige de débrayage et une deuxième extrémité mobile en rotation par rapport à l'élément mobile.

Selon une réalisation de l'invention, le dispositif de débrayage comporte un organe élastique de rappel disposé entre la tige de débrayage et le corps d'accoudoir.

Selon une réalisation de l'invention, la portion crantée de l'élément mobile et la portion crantée de l'élément fixe présentent chacune une pluralité de crans ayant une forme en escalier.

Selon une réalisation de l'invention, la portion crantée de l'élément fixe est réalisée sur une partie en saillie axiale de l'élément fixe et la portion crantée de l'élément mobile est réalisée sur une partie en saillie axiale de l'élément mobile.

Selon une réalisation de l'invention, la portion crantée de l'élément fixe et la portion crantée de l'élément mobile sont réalisées sur des faces de forme hélicoïdale.

Selon une réalisation de l'invention, les portions crantées sont dimensionnées de façon à autoriser un pas angulaire du corps d'accoudoir compris entre 2 et 5 degrés et valant de préférence 2,5 degrés.

Selon une réalisation de l'invention, le moyen d'actionnement est un bouton disposé sur une face du corps d'accoudoir.

Selon une réalisation de l'invention, ledit accoudoir comporte un disque de friction fixé sur le bras d'accoudoir coopérant avec le corps d'accoudoir.

Selon une réalisation de l'invention, le corps d'accoudoir porte des tiges insérées chacune à l'intérieur d'une fente de guidage de forme correspondante ménagée à une périphérie externe de l'élément mobile.

Selon une réalisation de l'invention, le corps d'accoudoir est recouvert par un habillage de finition.

L'invention a également pour objet un ensemble comportant :
- un siège d'avion, et
- un accoudoir tel que précédemment défini.

Selon une réalisation de l'invention, le siège d'avion est mobile entre une position relevée et une position lit.

L'invention concerne en outre un avion comportant un ensemble tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
[Fig. 1] La figure 1 est une vue en perspective d'un siège muni d'un accoudoir réglable en rotation selon l'invention ;
[Fig. 2] La figure 2 montre des vues de côté de différentes positions que peut prendre l'accoudoir selon l'invention en fonction de la position du siège de la figure 1 ;
[Fig. 3] La figure 3 est une vue en perspective d'un accoudoir réglable en rotation selon l'invention ;
[Fig. 4] La figure 4 est une vue en perspective d'un accoudoir réglable en rotation selon l'invention sans l'habillage de finition et dont le mécanisme interne est vu par transparence ;
[Fig. 5] La figure 5 est une vue en perspective de dessus de composants internes d'un accoudoir réglable en rotation selon l'invention ;
[Fig. 6] La figure 6 est une vue en perspective d'un dispositif de débrayage d'un accoudoir selon l'invention ;
[Fig. 7a] [Fig. 7b] Les figures 7a et 7b sont des vues en perspective partielle d'un accoudoir selon l'invention respectivement lorsque le dispositif de débrayage est à l'état verrouillé et à l'état déverrouillé ;
[Fig. 8] La figure 8 est une vue en perspective partielle illustrant la mise en butée du dispositif de réglage en rotation de l'accoudoir lorsque ce dernier se trouve dans une position relevée ;
[Fig. 9] La figure 9 est une vue en perspective d'un bras d'accoudoir selon l'invention muni d'un disque de friction destiné à coopérer avec le corps d'accoudoir;
[Fig. 10a] [Fig. 10b] [Fig. 10c] Les figures 10a, 10b, et 10c sont des vues schématiques de dessus illustrant le fonctionnement du dispositif de débrayage de l'accoudoir selon l'invention ;
[Fig. 11] La figure 11 illustre une variation de la zone de superposition entre un élément fixe et un élément mobile du dispositif de réglage en rotation en fonction de différentes positions angulaires de l'accoudoir.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

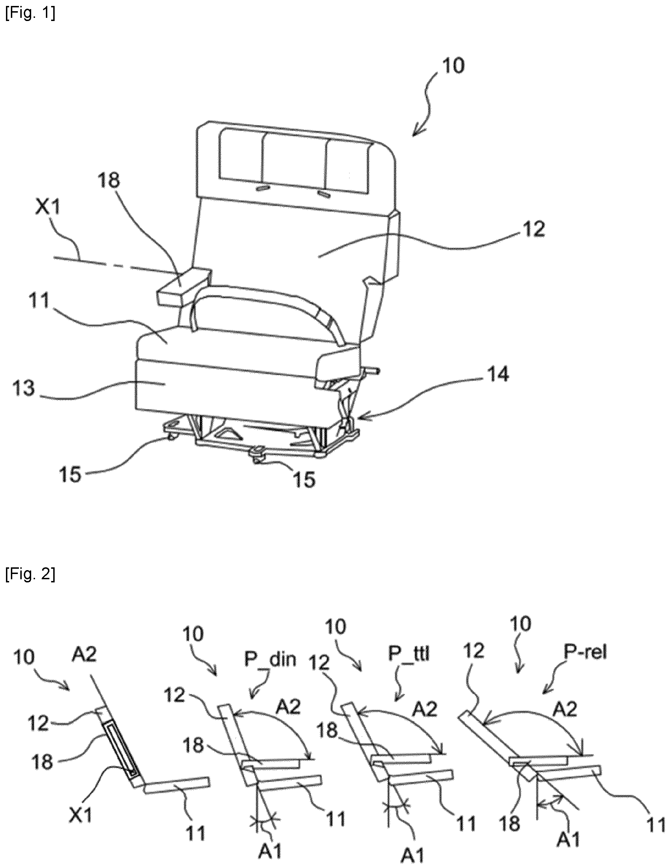

La figure 1 montre un siège 10 notamment pour une cabine d'avion comportant une assise 11, un dossier 12 articulé par rapport à l'assise 11 par l'intermédiaire d'une liaison pivot à axe horizontal. Le cas échéant, le siège 10 peut comporter un repose-jambes 13 articulé par rapport à l'assise 11 par l'intermédiaire d'une liaison pivot à axe horizontal.

Le siège 10 comporte également une structure de siège 14 destinée à être fixée sur des rails d'une cabine d'avion. A cet effet, la structure de siège 14 comporte des verrous 15 aptes à coopérer avec les rails de la cabine d'avion.

Le siège 10 est avantageusement pourvu d'une cinématique lui permettant d'être mobile entre une position relevée et une position lit. La cinématique comporte un ensemble d'actionneurs, de pièces de liaison, et d'articulations permettant d'assurer le déplacement relatif des différents composants du siège lors d'un passage d'une position à une autre. Le siège 10 peut également prendre des positions intermédiaires.

Comme cela est illustré sur la figure 2, le siège 10 peut notamment prendre une position dîner P_din dans laquelle le dossier 12 est fortement relevé de telle façon que le passager soit confortablement installé pour profiter de son repas, une position TTL (pour "Taxi Take-off, Landing" en anglais ou "stationnement, décollage, atterrissage" en français) référencée P_ttl prise par le siège 10 dans les phases de décollage, d'atterrissage ou de stationnement de l'avion, ou encore une position relax P_rel dans laquelle le dossier 12 du siège 10 est fortement incliné vers l'arrière. Dans les positions dîner, TTL et relax, le dossier 12 peut par exemple former un angle A1 par rapport à une direction verticale de référence valant respectivement 15 degrés, 20 degrés, et 40 degrés.

Un accoudoir 18 associé au siège 10 est réglable en rotation de façon à pouvoir s'étendre dans un plan horizontal quelle que soit la position du siège 10. L'accoudoir 18 comporte un bras d'accoudoir 19 comprenant une interface de fixation 25 avec la structure de siège 14. L'interface de fixation 25 peut comporter des ouvertures de passage d'organes de fixation, tels que des vis ou des rivets ou tout autre organe de fixation adapté à l'application.

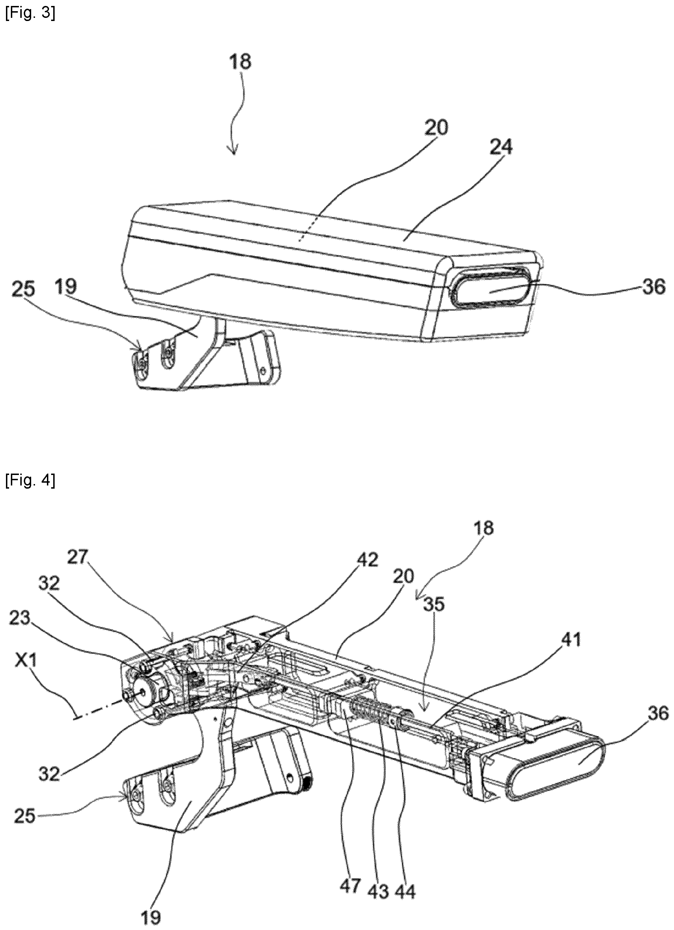

Un corps d'accoudoir 20 visible sur la figure 4 comporte une face supérieure apte à supporter une partie du corps d'un passager, notamment son bras. Un axe 23 porté par le bras d'accoudoir 19 définit un axe de rotation X1 du corps d'accoudoir 20 par rapport au bras d'accoudoir 19. L'axe 23 peut par exemple prendre la forme d'une tige emmanchée ou vissée sur le bras d'accoudoir 19.

Le corps d'accoudoir 20 est de préférence recouvert par un habillage de finition 24, tel que montré sur la figure 3. L'habillage de finition 24 peut être en tissu, en cuir, en velours, en alcantara ou tout autre matériau adapté à la finition de l'accoudoir 18.

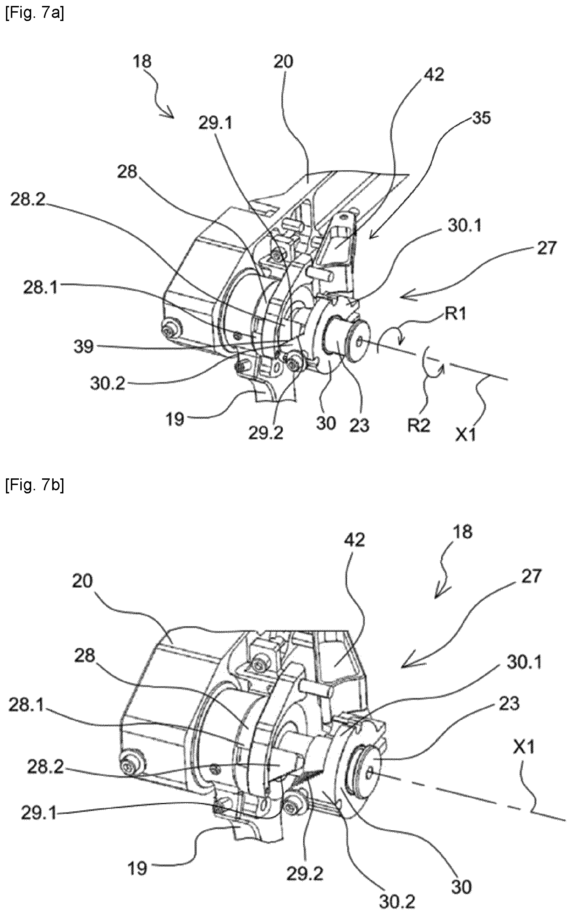

Comme on peut le voir sur les figures 7a et 7b, un dispositif 27 de réglage en rotation du corps d'accoudoir 20 comporte un élément fixe 28 qui est fixé sur le bras d'accoudoir 19. L'élément fixe 28 comporte une portion crantée 29.1 destinée à coopérer avec une portion crantée 29.2 de forme correspondante d'un élément mobile 30 décrit plus en détails ci-après. Plus précisément, l'élément fixe 28 comporte une portion annulaire 28.1 munie d'une ouverture de passage de l'axe 23 pour permettre le montage de l'élément fixe 28 autour de l'axe 23. L'élément fixe 28 est fixé sur le bras d'accoudoir 19 au moyen d'organes de fixation, tels que des vis, des rivets, ou un moyen de fixation chimique tel que de la colle, ou tout autre moyen de fixation adapté à l'application. Suivant certains modes de réalisation, l'élément fixe 28 peut constituer une portion du bras d'accoudoir 19.

La portion crantée 29.1 de l'élément fixe 28 est réalisée sur une partie saillante 28.2 s'étendant en saillie axiale par rapport à une face d'extrémité de la portion annulaire 28.1. Dans la présente description, les termes "axial" et "radial" sont entendus par rapport à une direction d'extension longitudinale de l'axe 23. La portion crantée 29.1 est réalisée sur une face latérale de la partie saillante 28.2 de l'élément fixe 28. La face de l'élément fixe 28 sur laquelle est réalisée la portion crantée 29.1 présente une forme hélicoïdale.

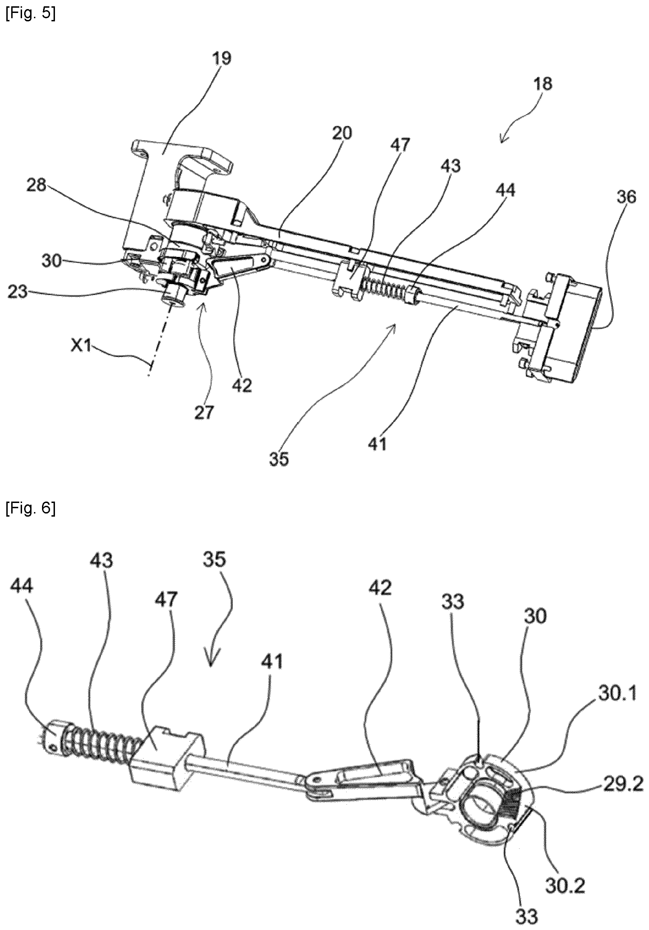

Par ailleurs, l'élément mobile 30 est lié en rotation avec le corps d'accoudoir 20 tout en étant mobile en translation par rapport au corps d'accoudoir 20 suivant l'axe de rotation X1 de l'accoudoir 18. A cet effet, le corps d'accoudoir 20 porte des tiges 32 visibles par transparence sur la figure 4 insérées chacune à l'intérieur d'une fente de guidage 33 de forme correspondante. Les fentes de guidage 33 visibles sur la figure 6 sont ménagées à la périphérie externe de l'élément mobile 30. Les tiges 32 présentent une orientation axiale par rapport à l'axe 23.

L'élément mobile 30 comporte la portion 29.2 crantée de forme complémentaire de la portion crantée 29.1 de l'élément fixe 28. L'élément fixe 28 et l'élément mobile 30 sont montés de façon co-axiale l'un par rapport à l'autre.

Plus précisément, comme on peut le voir sur la figure 6, l'élément mobile 30 comporte une portion annulaire 30.1 munie d'une ouverture de passage de l'axe 23. La portion crantée 29.2 de l'élément mobile 30 est réalisée sur une partie saillante 30.2 s'étendant en saillie axiale par rapport à une face d'extrémité de la portion annulaire 30.1. La portion crantée 29.2 est réalisée sur une face latérale de la partie saillante de l'élément mobile 30. La face de l'élément mobile 30 sur laquelle est réalisée la portion crantée 29.2 présente une forme hélicoïdale.

Comme cela est montré sur les figures 7a et 7b, la partie saillante 28.2 de l'élément fixe 28 et la partie saillante 30.2 de l'élément mobile 30 sont dirigées l'une vers l'autre. Ainsi, la partie saillante 28.2 de l'élément fixe 28 est dirigée vers l'élément mobile 30. La partie saillante 30.2 de l'élément mobile 30 est dirigée vers l'élément fixe 28.

La portion crantée 29.2 de l'élément mobile 30 et la portion crantée 29.1 de l'élément fixe 28 présentent chacune une pluralité de crans ayant une forme en escalier. Chaque cran correspond à une marche de l'escalier. Les portions crantées 29.1, 29.2 sont dimensionnées de façon à autoriser un pas angulaire compris entre 2 et 5 degrés et valant de préférence 2,5 degrés.

Comme on peut le voir sur les figures 4 et 5, un dispositif de débrayage 35 est actionnable par un moyen d'actionnement 36. Suivant un mode de réalisation préféré, le moyen d'actionnement 36 est un bouton disposé sur une face avant du corps d'accoudoir 20. En variante, le bouton peut être disposé sur une face latérale ou une face supérieure du corps d'accoudoir 20. En variante, le bouton d'actionnement 36 peut être remplacé par un levier ou tout autre moyen d'actionnement adapté à l'application.

Le dispositif de débrayage 35 est apte à prendre un état verrouillé dans lequel la portion crantée de l'élément mobile 30 vient en appui contre la portion crantée de l'élément fixe 28 (cf. figure 7a) dans une position angulaire de butée correspondant à une position d'utilisation de l'accoudoir 18. Une telle configuration bloque une rotation du corps d'accoudoir 20 dans un premier sens de rotation R1 autour de l'axe de rotation X1 tout en autorisant une rotation du corps d'accoudoir 20 autour de l'axe de rotation X1 dans un deuxième sens de rotation R2 opposé au premier sens de rotation R1. De préférence, le premier sens de rotation R1 correspond à un sens horaire lorsqu'on regarde de côté l'accoudoir 18 dirigé vers la droite. Le deuxième sens de rotation R2 correspond donc à un sens anti-horaire lorsqu'on regarde de côté l'accoudoir 18 dirigé vers la droite. Dans l'état verrouillé, le corps d'accoudoir 20 ne peut plus tourner vers le bas et le passager peut reposer son bras sur le corps d'accoudoir 20.

Comme cela est illustré sur la figure 2, l'accoudoir peut prendre une position stockée dans laquelle l'accoudoir 18 forme un angle A2 de 0 degrés par rapport au dossier 12. Une position d'utilisation de l'accoudoir 18 peut par exemple être une position "dîner" dans laquelle l'accoudoir 18 forme un angle de 105 degrés par rapport au dossier 12, une position dite TTL (pour "Taxi Take-off, Landing" en anglais ou "stationnement, décollage, atterrissage" en français) dans laquelle l'accoudoir 18 forme un angle de 110 degrés par rapport au dossier 12 ou une position relax dans laquelle l'accoudoir 18 forme un angle de 130 degrés par rapport au dossier 12. Les positions d'utilisation de l'accoudoir 18 sont indiquées en référence aux positions du siège 10 correspondantes.

Dans l'état verrouillé, la portion crantée 29.2 de l'élément mobile 30 se superpose au moins en partie avec la portion crantée 29.1 de l'élément fixe 28 suivant une zone de superposition 39. Dans cette zone de superposition 39, plusieurs crans de l'élément mobile 30 coopèrent avec des crans de forme correspondante de l'élément fixe 28. La longueur de la zone de superposition 39 est variable en fonction de la position angulaire du corps d'accoudoir 20.

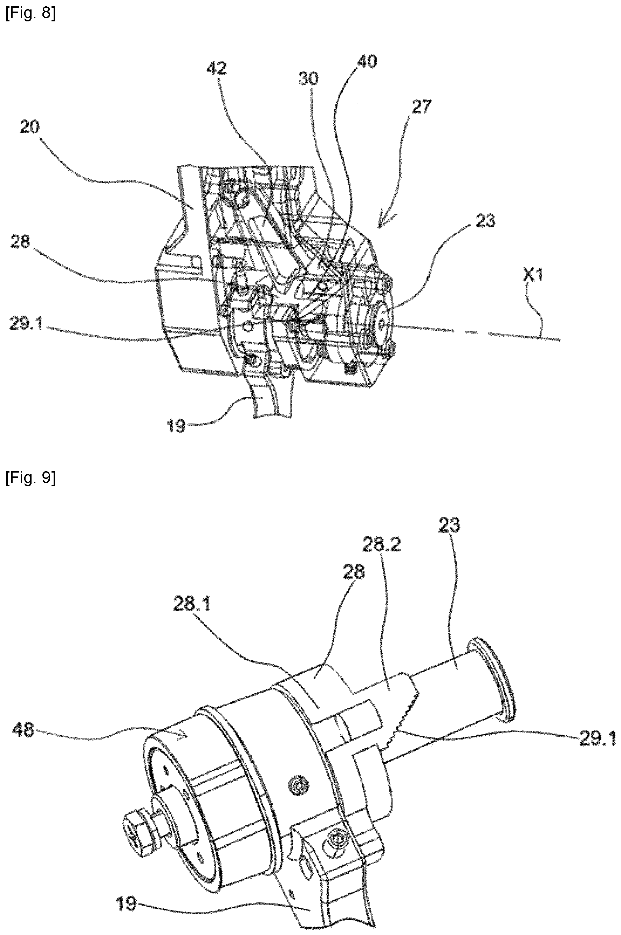

Dans le deuxième sens de rotation R2, il n'y a pas d'obstacle pour l'élément fixe 28 de sorte que le corps d'accoudoir 20 peut se déplacer librement vers l'arrière vers la position stockée dans laquelle l'accoudoir 18 se situe dans un prolongement du dossier 12. Comme on peut le voir sur la figure 8, l'élément mobile 30 peut comporter une butée angulaire 40 permettant d'arrêter en rotation le corps d'accoudoir 20 en position stockée. La butée angulaire 40 de l'élément mobile 30 est destinée à venir en appui contre une face de la portion saillante 28.2 de l'élément fixe 28 opposée à la face comportant la portion crantée 29.1.

Le dispositif de débrayage 35 est également apte à prendre un état déverrouillé dans lequel la portion crantée 29.2 de l'élément mobile 30 est éloignée axialement de la portion crantée 29.1 de l'élément fixe 28, tel que montré sur la figure 7b. Cela permet d'autoriser une rotation du corps d'accoudoir 20 dans le premier sens de rotation R1 vers le bas pour permettre une modification de la position angulaire de butée.

En effet, lorsque l'élément mobile 30 est éloigné de l'élément fixe 28, la rotation du corps d'accoudoir 20 vers l'avant suivant le premier sens de rotation R1 permet d'effectuer un décalage angulaire de la portion crantée 29.2 de l'élément mobile 30 par rapport à la portion crantée 29.1 de l'élément fixe 28. Un relâchement du moyen d'actionnement 36 permet ensuite de faire coopérer la portion crantée 29.2 de l'élément mobile 30 avec la portion crantée 29.1 de l'élément fixe 28, de sorte que le dispositif de débrayage 35 repasse dans un état verrouillé. La position angulaire de butée de l'accoudoir 18 est ainsi modifiée en adaptant une longueur de la zone de superposition 39.

A cet effet, comme on peut le voir sur les figures 4, 5, et 6, le dispositif de débrayage 35 comporte une tige de débrayage 41 mobile en translation par rapport au corps d'accoudoir 20 et une bielle 42 ayant une première extrémité mobile en rotation par rapport à la tige de débrayage 41 et une deuxième extrémité mobile en rotation par rapport à l'élément mobile 30.

Le dispositif de débrayage 35 comporte un organe élastique de rappel 43, tel qu'un ressort ou tout autre élément pouvant assurer cette fonction, disposé entre la tige de débrayage 41 et le corps d'accoudoir 20. En l'occurrence, l'organe élastique de rappel 43 vient en appui d'une part contre un anneau 44 fixé sur la tige de débrayage 41 et d'autre part contre un élément de guidage 47 en translation de la tige de débrayage 41. L'élément de guidage 47 est fixe par rapport au corps d'accoudoir 20. L'élément de guidage 47 présente par exemple une forme parallélépipédique et comporte une ouverture de passage de la tige de débrayage 41. L'élément de guidage 47 est réalisé de façon à être (dé)montable (pour une question de maintenance) et à remplir une fonction de guidage de la tige 41, une fonction de recentrage des deux pièces principales formant le corps d'accoudoir 20 et une fonction d'appui de l'organe élastique de rappel 43. L'élément de guidage 47 peut donc présenter toute forme autre qu'une forme parallélépipèdique permettant de remplir les fonctions précitées, en particulier une forme cylindrique avec ou sans gorge, épaulement ou méplat.

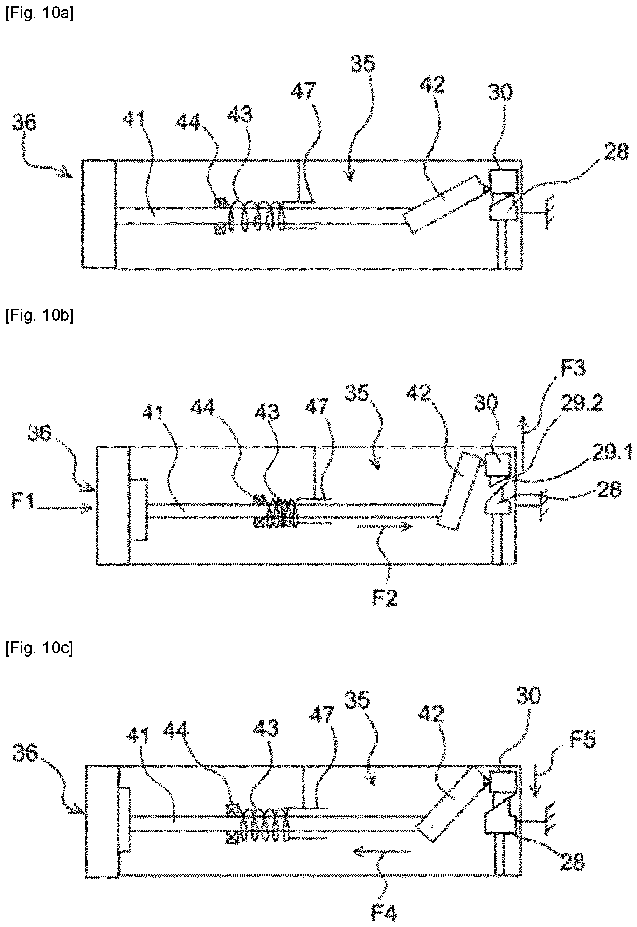

On décrit ci-après en référence avec les figures 10a, 10b, et 10c, un fonctionnement de l'accoudoir 18 se trouvant par exemple initialement dans une position dîner (cf. figure 10a).

Dans le cas où le passager souhaite déplacer l'accoudoir 18 vers le haut en position stockée, le passager peut pousser le corps d'accoudoir 20 vers le haut sans avoir à appuyer sur le moyen d'actionnement 36.

Comme cela est illustré sur la figure 10b, lorsque le passager souhaite déplacer le corps d'accoudoir 20 vers le bas en position TTL ou en position relax, le passager appuie sur le moyen d'actionnement 36 suivant la flèche F1 ce qui a pour effet de déplacer en translation la tige de débrayage 41 en direction de l'élément mobile 30 suivant la flèche F2 et de comprimer l'organe élastique de rappel 43. Le déplacement de la tige de débrayage 41 engendre une rotation de la bielle 42 autour de la première extrémité, ce qui a pour effet d'écarter l'élément mobile 30 par rapport à l'élément fixe 28 suivant la flèche F3. Le passager peut alors déplacer le corps d'accoudoir 20 dans la position souhaitée.

Comme cela est illustré sur la figure 10c, une fois la position souhaitée atteinte, le passager peut relâcher le bouton d'actionnement 36, ce qui a pour effet de décomprimer l'organe élastique de rappel 43, lequel déplace en translation la tige de débrayage 41 suivant une direction opposée à l'élément mobile 30 (cf. flèche F4). Le déplacement de la tige de débrayage 41 engendre une rotation de la bielle 42 autour de la première extrémité, de sorte que l'élément mobile 30 se rapproche de l'élément fixe 28 suivant la flèche F5. La portion crantée 29.2 de l'élément mobile 30 vient alors coopérer avec la portion crantée 29.1 de l'élément fixe 28 de façon à maintenir le corps d'accoudoir 20 dans la position souhaitée.

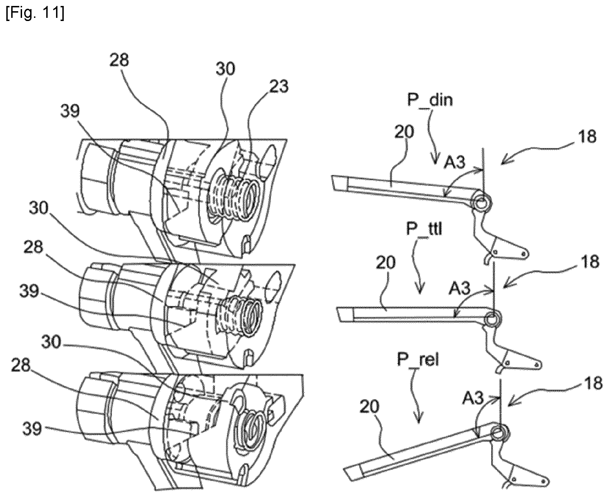

Plus l'accoudoir 18 est déplacé vers le bas, plus la longueur de la zone de superposition 39 entre les portions crantées 29.1, 29.2 de l'élément fixe 28 et de l'élément mobile 30 diminue. Ainsi, comme on peut le voir sur la figure 11, en position dîner P_din, la longueur de la zone de superposition 39 entre la portion crantée de l'élément mobile 30 et la portion crantée de l'élément fixe 28 est maximale tandis qu'en position relax P_rel, la zone de superposition 39 entre la portion crantée de l'élément mobile 30 et la portion crantée de l'élément fixe 28 est minimale. La longueur de la zone de superposition 39 est intermédiaire en position TTL. Sur la figure 11, l'angle A3 entre l'accoudoir et une direction verticale de référence vaut 105 degrés, 110 degrés et 130 degrés respectivement pour la position dîner P_din, la position TTL P_ttl et la position relax P_rel.

De préférence, l'effort à appliquer sur le moyen d'actionnement 36 pour faire passer le dispositif de débrayage 35 de l'état verrouillé à l'état déverrouillé est inférieur ou égal à 10 Newtons.

Comme cela est illustré sur la figure 9, l'accoudoir 18 peut également comporter un disque de friction 48 fixé sur le bras d'accoudoir 19 destiné à coopérer avec le corps d'accoudoir 20. Cela permet notamment de conférer une certaine résistance lors du déplacement de l'accoudoir 18 d'une position à une autre tout en permettant à l'accoudoir 18 d'être maintenu dans une position intermédiaire. Le disque de friction 48 est disposé d'un côté opposé à celui comportant le dispositif 27 de réglage en rotation de l'accoudoir 18.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que peut envisager l'homme du métier dans le cadre de la présente invention.

## Revendications

1. Accoudoir (18) pour un siège (10) comportant :
- un bras d'accoudoir (19),
- un corps d'accoudoir (20) apte à supporter une partie du corps d'un passager,
- un axe (23) porté par le bras d'accoudoir (19) définissant un axe de rotation (X1) du corps d'accoudoir (20) par rapport au bras d'accoudoir (19),
- un dispositif (27) de réglage en rotation du corps d'accoudoir (20), **caractérisé en ce que** ledit dispositif (27) de réglage en rotation du corps d'accoudoir (20) comporte :
- un élément fixe (28) fixé sur le bras d'accoudoir (19), ledit élément fixe (28) comportant une portion crantée (29.1),
- un élément mobile (30) lié en rotation avec le corps d'accoudoir (20) tout en étant mobile en translation par rapport au corps d'accoudoir (20) suivant l'axe de rotation (X1) de l'accoudoir (18), ledit élément mobile (30) comportant une portion crantée (29.2) de forme complémentaire de la portion crantée (29.1) de l'élément fixe (28), et
- un dispositif de débrayage (35) actionnable par un moyen d'actionnement (36), ledit dispositif de débrayage (35) étant apte à prendre :
- un état verrouillé dans lequel la portion crantée (29.2) de l'élément mobile (30) vient en appui contre la portion crantée (29.1) de l'élément fixe (28) dans une position angulaire de butée de façon à bloquer une rotation du corps d'accoudoir (20) dans un premier sens de rotation (R1) tout en autorisant une rotation du corps d'accoudoir (20) dans un deuxième sens de rotation (R2) opposé au premier sens de rotation (R1), et
- un état déverrouillé dans lequel la portion crantée (29.2) de l'élément mobile (30) est éloignée axialement de la portion crantée (29.1) de l'élément fixe (28) de façon à autoriser une rotation du corps d'accoudoir (20) dans le premier sens de rotation (R1) pour permettre une modification de la position angulaire de butée,
- un passage de l'état verrouillé à l'état déverrouillé étant apte à être obtenu par un déplacement en translation de l'élément mobile (30) suivant l'axe de rotation (X1) du corps d'accoudoir (20).

2. Accoudoir selon la revendication 1, **caractérisé en ce que** le dispositif de débrayage (35) comporte une tige de débrayage (41) mobile en translation par rapport au corps d'accoudoir (20) et une bielle (42) ayant une première extrémité mobile en rotation par rapport à la tige de débrayage (41) et une deuxième extrémité mobile en rotation par rapport à l'élément mobile (30).

3. Accoudoir selon la revendication 2, **caractérisé en ce que** le dispositif de débrayage (35) comporte un organe élastique de rappel (43) disposé entre la tige de débrayage (41) et le corps d'accoudoir (20).

4. Accoudoir selon l'une quelconque des revendications 1 à 3, **caractérisé en ce que** la portion crantée (29.2) de l'élément mobile (30) et la portion crantée (29.1) de l'élément fixe (28) présentent chacune une pluralité de crans ayant une forme en escalier.

5. Accoudoir selon l'une quelconque des revendications 1 à 4, **caractérisé en ce que** la portion crantée (29.1) de l'élément fixe (28) est réalisée sur une partie en saillie axiale de l'élément fixe (28) et la portion crantée (29.2) de l'élément mobile (30) est réalisée sur une partie en saillie axiale de l'élément mobile (30).

6. Accoudoir selon l'une quelconque des revendications 1 à 5, **caractérisé en ce que** la portion crantée (29.1) de l'élément fixe (28) et la portion crantée (29.2) de l'élément mobile (30) sont réalisées sur des faces de forme hélicoïdale.

7. Accoudoir selon l'une quelconque des revendication 1 à 6, **caractérisé en ce que** les portions crantées (29.1, 29.2) sont dimensionnées de façon à autoriser un pas angulaire du corps d'accoudoir (20) compris entre 2 et 5 degrés et valant de préférence 2,5 degrés.

8. Accoudoir selon l'une quelconque des revendications 1 à 7, **caractérisé en ce que** le moyen d'actionnement (36) est un bouton disposé sur une face du corps d'accoudoir (20).

9. Accoudoir selon l'une quelconque des revendications 1 à 8, **caractérisé en ce qu'**il comporte un disque de friction (48) fixé sur le bras d'accoudoir (19) coopérant avec le corps d'accoudoir (20).

10. Accoudoir selon l'une quelconque des revendications 1 à 9, **caractérisé en ce que** le corps d'accoudoir (20) porte des tiges (32) insérées chacune à l'intérieur d'une fente de guidage (33) de forme correspondante ménagée à une périphérie externe de l'élément mobile (30).

11. Accoudoir selon l'une quelconque des revendications 1 à 10, **caractérisé en ce que** le corps d'accoudoir (20) est recouvert par un habillage de finition.

12. Ensemble **caractérisé en ce qu'**il comporte :
- un siège d'avion (10), et
- un accoudoir (18) tel que défini selon l'une quelconque des revendications précédentes.

13. Ensemble selon la revendication 12, **caractérisé en ce que** le siège d'avion (10) est mobile entre une position relevée et une position lit.

14. Avion **caractérisé en ce qu'**il comporte un ensemble tel que défini selon la revendication 12 ou 13.

## Patentansprüche

1. Armlehne (18) für einen Sitz (10), mit:
- einem Lehnenarm (19),
- einem Lehnenkörper (20), der einen Teil des Körpers eines Passagiers stützen kann,
- einer Achse (23), die vom Lehnenarm (19) getragen wird und eine Drehachse (X1) des Lehnenkörpers (20) relativ zum Lehnenarm (19) definiert,
- einer Vorrichtung (27) zum Einstellen der Drehung des Lehnenkörpers (20), **dadurch gekennzeichnet, dass** die Vorrichtung (27) zum Einstellen der Drehung des Lehnenkörpers (20) Folgendes umfasst:
- ein festes Element (28), das an dem Lehnenarm (19) befestigt ist und einen gerasteten Abschnitt (29.1) aufweist,
- ein bewegliches Element (30), das drehbar mit dem Lehnenkörper (20) verbunden ist und sich relativ zum Lehnenkörper (20) entsprechend dem Drehwinkel (X1) der Armlehne (18) translatorisch bewegen lässt, wobei dieses bewegliche Element (30) einen gerasteten Abschnitt (29.2) aufweist, dessen Form komplementär zum gerasteten Abschnitt (29.1) des festen Elements (28) ist, und
- eine Auskupplungsvorrichtung (35), die durch ein Betätigungsmittel (36) betätigt werden kann, wobei diese Auskupplungsvorrichtung (35) folgende Funktionen erfüllen kann:
- ein verriegelter Zustand, in dem der gerastete Abschnitt (29.2) des beweglichen Elements (30) in einer Winkelanschlagposition gegen den gerasteten Abschnitt (29.1) des festen Elements (28) drückt, um die Drehung des Lehnenkörpers (20) in einer ersten Drehrichtung (R1) zu blockieren, während gleichzeitig die Drehung des Lehnenkörpers (20) in einer zweiten, der ersten Drehrichtung (R1) entgegengesetzten Drehrichtung (R2) ermöglicht wird, und
- ein entriegelter Zustand, in dem der gerastete Abschnitt (29.2) des beweglichen Elements (30) axial vom gerasteten Abschnitt (29.1) des festen Elements (28) getrennt ist, um eine Drehung des Lehnenkörpers (20) in der ersten Drehrichtung (R1) zu ermöglichen und somit die Winkelanschlagposition zu verändern,
- wobei ein Übergang vom verriegelten Zustand in den entriegelten Zustand durch eine translatorische Bewegung des beweglichen Elements (30) entlang der Drehachse (X1) des Lehnenkörpers (20) erreicht werden kann.

2. Armlehne nach Anspruch 1, **dadurch gekennzeichnet, dass** die Auskupplungsvorrichtung (35) eine Auskupplungsstange (41) umfasst, die sich relativ zum Lehnenkörper (20) translatorisch bewegen kann, und eine Verbindungsstange (42), deren erstes Ende sich relativ zur Auskupplungsstange (41) drehen kann und deren zweites Ende sich relativ zum beweglichen Element (30) drehen kann.

3. Armlehne nach Anspruch 2, **dadurch gekennzeichnet, dass** die Auskupplungsvorrichtung (35) ein elastisches Rückstellelement (43) zwischen der Auskupplungsstange (41) und dem Lehnenkörper (20) aufweist.

4. Armlehne nach einem der Ansprüche 1 bis 3, **dadurch gekennzeichnet, dass** der gerastete Abschnitt (29.2) des beweglichen Elements (30) und der gerastete Abschnitt (29.1) des festen Elements (28) jeweils eine Mehrzahl von gestuften Rasten aufweisen.

5. Armlehne nach einem der Ansprüche 1 bis 4, **dadurch gekennzeichnet, dass** der gerastete Abschnitt (29.1) des festen Elements (28) an einem axial vorspringenden Teil des festen Elements (28) und der gerastete Abschnitt (29.2) des beweglichen Elements (30) an einem axial vorspringenden Teil des beweglichen Elements (30) ausgebildet ist.

6. Armlehne nach einem der Ansprüche 1 bis 5, **dadurch gekennzeichnet, dass** der gerastete Abschnitt (29.1) des festen Elements (28) und der gerastete Abschnitt (29.2) des beweglichen Elements (30) auf spiralförmigen Flächen ausgebildet sind.

7. Armlehne nach einem der Ansprüche 1 bis 6, **dadurch gekennzeichnet, dass** die gerasteten Abschnitte (29.1, 29.2) so dimensioniert sind, dass eine Winkelneigung des Lehnenkörpers (20) zwischen 2 und 5 Grad und vorzugsweise von 2,5 Grad möglich ist.

8. Armlehne nach einem der Ansprüche 1 bis 7, **dadurch gekennzeichnet, dass** das Betätigungsmittel (36) ein Knopf auf einer Seite des Lehnenkörpers (20) ist.

9. Armlehne nach einem der Ansprüche 1 bis 8, **dadurch gekennzeichnet, dass** sie eine am Lehnenarm (19) befestigte Reibscheibe (48) umfasst, die mit dem Lehnenkörper (20) zusammenwirkt.

10. Armlehne nach einem der Ansprüche 1 bis 9, **dadurch gekennzeichnet, dass** der Lehnenkörper (20) Stangen (32) trägt, die jeweils in einen entsprechend geformten Führungsschlitz (33) an einem Außenumfang des beweglichen Elements (30) eingesetzt sind.

11. Armlehne nach einem der Ansprüche 1 bis 10, **dadurch gekennzeichnet, dass** der Lehnenkörper (20) mit einer Abschlussabdeckung versehen ist.

12. Anordnung, **dadurch gekennzeichnet, dass** sie umfasst:
- einen Flugzeugsitz (10),
- eine Armlehne (18) nach einem der vorhergehenden Ansprüche.

13. Anordnung nach Anspruch 12, **dadurch gekennzeichnet, dass** der Flugzeugsitz (10) zwischen einer aufrechten Position und einer Liegeposition beweglich ist.

14. Flugzeug, **dadurch gekennzeichnet, dass** es eine Anordnung nach Anspruch 12 oder 13 umfasst.

## Claims

1. An armrest (18) for a seat (10) comprising:
- an armrest arm (19),
- an armrest body (20) capable of supporting part of a passenger's body,
- an axis (23) carried by the armrest arm (19) defining an axis of rotation (X1) of the armrest body (20) relative to the armrest arm (19),
- a device (27) for adjusting the rotation of the armrest body (20), **characterized in that** said device (27) for adjusting the rotation of the armrest body (20) comprises:
- a fixed element (28) fixed to the armrest arm (19), said fixed element (28) comprising a notched portion (29.1),
- a movable element (30) rotationally linked to the armrest body (20) while being movable in translation relative to the armrest body (20) according to the rotation angle (X1) of the armrest (18), said movable element (30) comprising a notched portion (29.2) whose shape is complementary to the notched portion (29.1) of the fixed element (28), and
- a disengagement device (35) that can be actuated by an actuation means (36), said disengagement device (35) being capable of taking:
- a locked state in which the notched portion (29.2) of the movable element (30) bears against the notched portion (29.1) of the fixed element (28) in an angular stop position so as to block rotation of the armrest body (20) in a first direction of rotation (R1) while allowing rotation of the armrest body (20) in a second opposite direction of rotation (R2) relative to the first direction of rotation (R1), and
- an unlocked state in which the notched portion (29.2) of the movable element (30) is axially separated from the notched portion (29.1) of the fixed element (28) so as to allow rotation of the armrest body (20) in the first direction of rotation (R1) to allow modification of the angular stop position,
- a transition from the locked state to the unlocked state being able to be obtained by a translational movement of the movable element (30) along to the axis of rotation (X1) of the armrest body (20).

2. The armrest according to Claim 1, **characterized in that** the disengagement device (35) comprises a disengagement rod (41) movable in translation relative to the armrest body (20) and a connecting rod (42) having a first end movable in rotation relative to the disengagement rod (41) and a second end movable in rotation relative to the movable element (30).

3. The armrest according to Claim 2, **characterized in that** the disengagement device (35) comprises an elastic return member (43) between the disengagement rod (41) and the armrest body (20).

4. The armrest according to any one of the claims 1 to 3, **characterized in that** the notched portion (29.2) of the movable element (30) and the notched portion (29.1) of the fixed element (28) each have a plurality of stepped notches.

5. The armrest according to any one of the claims 1 to 4, **characterized in that** the notched portion (29.1) of the fixed element (28) is made on an axially projecting part of the fixed element (28) and the notched portion (29.2) of the movable element (30) is made on an axially projecting part of the movable element (30).

6. The armrest according to any one of the claims 1 to 5, **characterized in that** the notched portion (29.1) of the fixed element (28) and the notched portion (29.2) of the movable element (30) are made on helical faces.

7. The armrest according to any one of the claims 1 to 6, **characterized in that** the notched portions (29.1, 29.2) are dimensioned so as to allow an angular pitch of the armrest body (20) between 2 and 5 degrees and preferably of 2.5 degrees.

8. The armrest according to any one of the claims 1 to 7, **characterized in that** the actuation means (36) is a button on one face of the armrest body (20).

9. The armrest according to any one of the claims 1 to 8, **characterized in that** it comprises a friction disc (48) fixed on the armrest arm (19) cooperating with the armrest body (20).

10. The armrest according to any one of the claims 1 to 9, **characterized in that** the armrest body (20) carries rods (32) each inserted inside a correspondingly shaped guide slot (33) on an external periphery of the movable element (30).

11. The armrest according to any one of the claims 1 to 10, **characterized in that** the armrest body (20) is covered with a finishing cover.

12. An assembly **characterized in that** it comprises:
- an airplane seat (10), and
- an armrest (18) as defined according to any one of the preceding claims.

13. The assembly according to Claim 12, **characterized in that** the aircraft seat (10) is movable between an upright position and a bed position.

14. An aircraft **characterized in that** it comprises an assembly as defined according to Claim 12 or 13.
